# EUROPÄISCHE PATENTANMELDUNG

(11) **EP 1 315 018 A1**
(43) Veröffentlichungstag der Anmeldung: **28.05.2003**
(21) Anmeldenummer: 01128148.2
(22) Anmeldetag: 27.11.2001
(51) Int. Cl.: G02B 27/18, G03B 21/20, H01K 7/02

(54) **Lampenhaus mit zwei Lichtquellen für die Grossbildprojektion**

(71) Anmelder: KINOTON GmbH, D-82110 Germering (DE)
(72) Erfinder: Peschke, Günther, 86415 Mering (DE); Dobler, Christoph, 82229 Seefeld (DE)
(74) Vertreter: Rupprecht, Kay, Dipl.-Ing.

(57) **Zusammenfassung**

Es wird eine Vorrichtung zur Großbildprojektion mit einer Prokektionslampe (1) einer Bildprojektionsebene (3) und einem Objektiv (5) angegeben, wobei die Projektionslampe (1) ein Lichtkegel (7) durch die Bildprojektionsebene (3) und durch das Objektiv (5) dirigiert. Des weiteren wird eine Projektionslampe für das Lampenhaus eines Großbildprojektors angegeben. Mit dem Ziel, die Lichtleistung einer solchen Vorrichtung bzw. einer solchen Projektionslampe erheblich zu steigern, ist erfindungsgemäß vorgesehen, daß die Projektionslampe (1) zwei Lichtquellen (2, 4) enthält, die derart zueinander angeordnet sind, daß die Mäntel (6, 8) der beiden den (Haupt-)Lichtkegel (7) speisenden und von den Lichtquellen (2, 4) erzeugten Teillichtkegel (10, 12) wenigstens eine gemeinsame Mantellinie (14) aufweisen.

## Beschreibung

Die vorliegende Erfindung betrifft eine Vorrichtung zur Großbildprojektion, mit einer Projektionslampe, einer Bildprojektionsebene und einem Objektiv, wobei die Projektionslampe einen Lichtkegel durch die Bildprojektionsebene und durch das Objektiv dirigiert. Die Erfindung betrifft des weiteren eine Projektionslampe für das Lampenhaus eines Großbildprojektors.

Eine solche Vorrichtung ist Teil eines Großbildprojektors für Kinos, Erlebniszentren und ähnliche Einrichtungen, und wird in der Fachsprache überwiegend als "Lampenhaus" bezeichnet. Das Kernstück eines solchen Lampenhauses ist die Projektionslampe, die wegen der hohen Lichtausbeute und der sehr guten Farbwiedergabeeigenschaften meistens eine Xenonhochdrucklampe ist. Darunter versteht man bekanntlich eine Hochdrucklampe, deren Glaskolben unter einem hohen Druck von über 100 kPa mit dem Edelgas Xenon gefüllt ist. Bei Projektionslampen wird Xenon als Füllgas dem Quecksilber und einem Natriumdampf insofern vorgezogen, als Xenon im Lichtbogen neben Linien auch ein sehr intensives Kontinuum abstrahlt, das in seiner spektralen Verteilung dem Tageslicht nahekommt und das Licht deshalb, wie gesagt, sehr gute Farbwiedergabeeigenschaften aufweist. Außer dem Glaskolben gehört zu einer Projektionslampe bekannterweise auch ein schalenförmiger Reflektor, in welchem der Glaskolben nach dessen optischer Achse ausgerichtet teilweise über den oberen Rand der Reflektorschale hinausragend aufgenommen ist. Dieser Reflektor reflektiert das vom Lichtbogen abgestrahlte Licht in einem (runden) Lichtkegel, wobei die Projektionslampe derart angeordnet ist, daß sie den Lichtkegel durch die rechteckige Bildprojektionsebene mit dem dort durchlaufenden Filmband und durch das Objektiv dirigiert. Letzteres ist ein Projektionsobjektiv, welches auf die Großbildtechnik optimiert ist und deshalb mit einem Objektiv für gewöhnliche Videoprojektion nicht vergleichbar ist. Genutzt wird aus dem im Querschnitt kreisförmigen Lichtkegel also nur ein im Querschnitt rechteckiger Pyramidenstumpf.

Ein Nachteil der wegen der Lichtausbeute und der Farbtreue bevorzugten Xenonlampen besteht darin, daß sie bei den derzeit bekannten Werkstoffen und aufgrund der aus bekannten Gründen (u.a. die Temperaturbelastbarkeit) festgelegten geometrischen Konfiguration (z.B. Abstand des Lichtbogens vom Reflektor) eine maximale Leistung von 10.000 W aufweisen. Eine darüber hinausgehende Leistung ist nur mit einer Kühlung erzielbar, was die Lampe größer und daher schwerer handhabbar macht. Dies ist für die eine oder andere Auslegung einer Großbild-Projektionsfläche zu wenig. Der Trend geht hin zu immer größeren Projektionsflächen, was beispielsweise daran erkennbar ist, daß inzwischen jedes neue Kino als "Breitwand"-Kino ausgelegt ist. Dabei ist es zum Ausleuchten immer größerer Bildprojektionsflächen, also beispielsweise immer größerer Kinoleinwände, keineswegs ausreichend, einfach den Abstand der Projektionslampe von jener Kinoleinwand zu vergrößern: zum einen nimmt die Beleuchtungsstärke einer Fläche wegen des lichttechnischen Entfernungsgesetzes bekanntlich mit dem Quadrat ihres Abstandes von der Lichtquelle ab. Somit müßte die Leistung der Projektionslampe bei einer Vergrößerung ihres Abstands von der Projektionsfläche um das Quadrat der Abstandszunahme erhöht werden, um in der Projektionsfläche die gleiche Lichtintensität wie vorher zu erhalten. Das ist allerdings mit den derzeitigen Xenonlampen, die auf 10.000 W begrenzt sind, nicht möglich. Zum anderen geht der Trend auch hin zu immer kürzeren Kinos mit immer breiteren Bildprojektionsflächen. Durch die damit vorgegebenen kurzen Brennweiten des Projektors tritt physikalisch ein Randabfall der Lichtstärke auf, was zu einer unbefriedigenden Ausleuchtung des Bildes führt.

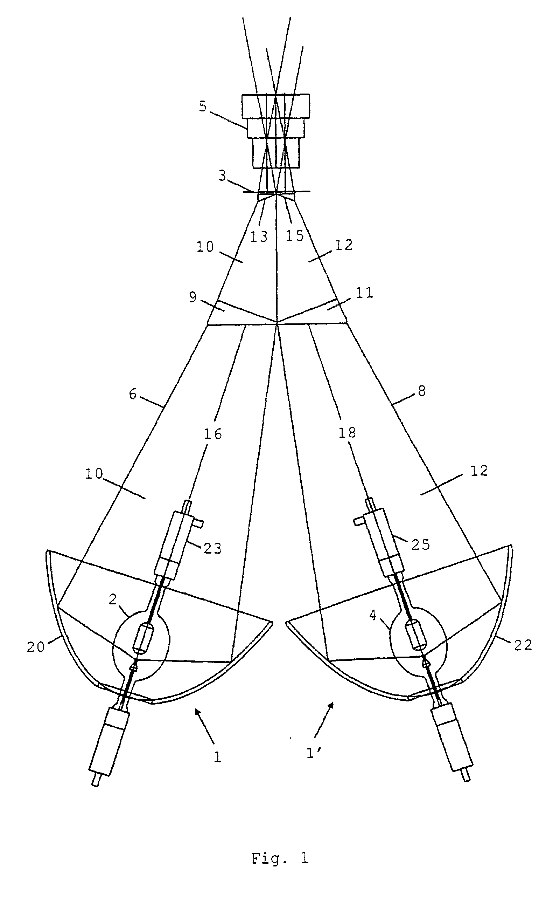

Nun ist es aus der 3D-Bildtechnik bekannt, zwei dieser bekannten Xenon-Projektionslampen nebeneinander angeordnet einzusetzen. **Fig. 1** zeigt eine solche zum Stand der Technik gehörende Anordnung. Sie besteht aus zwei Projektionslampen 1, 1' mit je einem schalenförmigen Reflektor 20, 22, in denen - nach der optischen Achse 16 bzw. 18 ausgerichtet - jeweils ein Glaskolben 23, 25 angeordnet ist, welche die eigentlichen Lichtquellen 2, 4 bilden. Jede dieser Projektionslampen 1, 1' dirigiert einen Teillichtkegel 10, 12 durch eine erste Prismenanordnung 9, 11, welche die Teillichtkegel 10, 12 - jeweils getrennt und nicht zu einem gemeinsamen Lichtkegel vereint - einer zweiten Prismenanordnung 13, 15 zuführt. Danach passieren die Teillichtkegel 10, 12 die Bildprojektionsebene 3 und werden durch das 3D-Objektiv 5 - wiederum einzeln und nicht vereint - auf die Projektionsfläche, also beispielsweise eine Kinoleinwand, geworfen. Bei dieser Anordnung dienen die Prismenanordnungen 9, 11 und 13, 15 der schrittweisen Umlenkung der Teillichtkegel 10, 12, die aufgrund des von den Reflektoren 20, 22 vorgegebenen Abstandes der Projektionslampen 1, 1' zueinander ohne die beiden Prismenanordnungen 9, 11; 13, 15 unter einem zu großen Winkel auf die Bildprojektionsebene 3 und insbesondere auf das Objektiv 5 auftreffen würden. Einher mit jeder Umlenkung der Teillichtkegel 10, 12 durch die Prismenanordnungen 9, 11; 13, 15 geht selbstverständlich ein beachtlicher Verlust an Lichtintentsität und Farbtreue, der bei 3D-Anwendungen in Kauf zu nehmen ist. Wünschenswert wäre es jedoch auch hier, die auf 10.000 W begrenzte Leistung der beiden Projektionslampen 1, 1' zu erhöhen, da damit eine Vergrößerung der Bildprojektionsfläche möglich wäre.

An dieser Problemstellung setzt die vorliegende Erfindung an, als deren Aufgabe es angesehen wurde, eine Vorrichtung zur Großbildprojektion mit einer Projektionslampe, die einen Lichtkegel durch eine Bildprojektionsebene und ein Objektiv dirigiert, **derart weiterzubilden, daß** eine deutliche Leistungssteigerung der Projektionslampe erzielbar ist.

Diese Aufgabe wird bei einer Vorrichtung zur Großbildprojektion bzw. durch eine Projektionslampe für das Lampenhaus eines Großbildprojektors der eingangs beschriebenen Arten dadurch gelöst, daß die Projektionslampe zwei Lichtquellen enthält, die derart zueinander angeordnet sind, daß die Mäntel der beiden den (Haupt-)Lichtkegel speisenden und von den Lichtquellen erzeugten Teillichtkegel wenigstens eine gemeinsame Mantellinie aufweisen.

Die erfindungsgemäße Lösung - es ist bei der Vorrichtung zur Großbildprojektion dieselbe, wie bei der Projektionslampe für das Lampenhaus eines Großbildprojektors - macht sich zunächst eine Erkenntnis zunutze, daß der Reflektor einer Projektionslampe im oberen Randbereich der Reflektorschale nur noch Streulicht reflektiert, welches den zur Bildprojektion nutzbaren, pyramidenstumpfförmigen Lichtkegel nicht oder nur noch vernachlässigbar speist. Der Lichtkegel wird aufgrund der vorgegebenen geometrischen Konfiguration einer Projektionslampe - selbstverständlich abhängig von der Krümmung der Reflektorschale - ohnehin nur in einem eingeschränkten inneren Bereich der Reflektorschale erzeugt. Erfindungsgemäß enthält die Vorrichtung zur Großbildprojektion bzw. die Projektionslampe für das Lampenhaus eines Großbildprojektors also zwei Lichtquellen, beispielsweise in Form von zwei herkömmlichen Xenonhochdrucklampen, die allerdings derart zueinander angeordnet sind, daß die Kegelmäntel der beiden einzelnen und von den beiden Lichtquellen erzeugten Teillichtkegel so eng aneinander liegen, daß die beiden Teillichtkegel wenigstens eine gemeinsame Mantellinie aufweisen. Hierbei sind die Bezeichnungen "Kegelmantel" und "Mantellinie" die der Stereometrie entnommenen Begriffe zur Beschreibung eines Kegels und sind deshalb auch zur Beschreibung der relativen läge der beiden Teillichtkegel zueinander herangezogen worden. Es ist ein wesentliches Element der vorliegenden Erfindung, daß die Teillichtkegel, welche durch das nutzbare reflektierte Licht gebildet werden, so eng aneinander liegen, daß sie als ein gemeinsamer (Haupt-)Lichtkegel die Bildprojektionsebene mit dem dort durchlaufenden Bildträger passieren und auch das Objektiv als ein Lichtkegel durchstrahlen. Während eine Parallelität der optischen Achsen der beiden Lichtquellen wegen der geometrischen Konfiguration der Lichtquellen einerseits und der Reflektoren andererseits nicht erzielbar sein dürfte, ist dennoch ein möglichst spitzer Winkel zwischen den beiden optischen Achsen anzustreben, um die Bildprojektionsebene (im Großformat, d.h. mit einem 70 mm- Film, 36 x 48 mm) ausreichend zu beleuchten und das erzeugte Licht möglichst verlustfrei durch das Objektiv zu dirigieren.

Die Vorteile der erfindungsgemäßen Lösung liegen zum einen in einer um etwa 60% höheren Lichtleistung gegenüber der Verwendung einer einzigen herkömmlichen Projektionslampe, und zum anderen in der mit dieser höheren Leistung einher gehenden Möglichkeit, auch sehr große Bildprojektionsflächen wie Kinoleinwände oder dergleichen mit einer hervorragenden Licht- und Farbintensität ausleuchten zu können.

Vorteilhalfte Weiterbildungen der Erfindung, die sowohl für die Vorrichtung zur Großbildprojektion als auch für die Projektionslampe für das Lampenhaus eines Großbildprojektors gelten, sind in den Unteransprüchen 2 bis 4 bzw. 6 bis 8 angegeben.

So ist beispielsweise vorgesehen, daß die optischen Achsen der beiden Teillichtkegel einen Winkel α von etwa 18° einschließen. Dieser Wert wurde durch Untersuchungen der Lichtverteilung auf einer Bildprojektionsfläche unter Verwendung der erfindungsgemäßen Lösung gefunden.

Es wurde vorstehend erläutert, daß sich die Erfindung unter anderem die Erkenntnis zunutze macht, daß der Lichtkegel nur von einem Teil der inneren Reflektorschale erzeugt wird. Diese Erkenntnis wird auch dazu benutzt, die beiden erfindungsgemäßen Lichtquellen mit ihren Reflektoren derart auszubilden, daß die beiden Reflektoren an der gemeinsamen Mantellinie der Teillichtkegel ineinander übergehen, wobei dann die gemeinsame Mittellinie im Querschnitt eine Schnittlinie der beiden Reflektoren miteinander definiert.

Dieser Übergang des einen (Teil-)Reflektors in den anderen wird vorzugsweise dadurch realisiert, daß die Ränder jener den beiden Lichtquellen zugeordneten (Teil-)Reflektoren jeweils auf der einander zugewandten Seite gekürzt und die gekürzten Abschnitte miteinander verbunden sind. Dadurch entsteht wiederum eine gemeinsame Randlinie, die im Querschnitt eine Schnittlinie der beiden Reflektoren miteinander definiert.

Im folgenden wird ein bevorzugtes Ausführungsbeispiel der Erfindung anhand einer Zeichnung näher erläutert.

Es zeigen:
- Fig. 1: eine 3D-Projektionsanordnung gemäß dem Stand der Technik;
- Fig. 2: eine Vorrichtung zur Großbildprojektion bzw. eine Projektionslampe für das Lampenhaus eines Großbildprojektors gemäß der vorliegenden Erfindung, im Schnitt; und
- Fig. 3: drei Diagramme zur Lichtverteilung.

Das 3D-Lampenhaus gemäß dem Stand der Technik wurde bereits in der Einleitung erläutert. Es enthält zwei Projektionslampen 1, 1' in Form von handelsüblichen Xenonhochdrucklampen, die jeweils einen Teillichtkegel 10, 12 erzeugen. Diese Teillichtkegel 10, 12 werden separat durch Prismenanordnungen 9, 11; 13, 15 und danach durch eine Bildprojektionsebene 3 und ein 3D-Objektiv 5 dirigiert. Trotz der Verwendung von zwei Projektionslampen 1, 1' mit jeweils maximal 10.000 W Leistung sind jedoch die Licht- und Farbintensität nicht über die mit einer einzelnen Projektionslampe erzielbaren Werte zu steigern. Eine solche Doppellampen-Anordnung ist auch nicht zu dem Zwecke der Leistungssteigerung konstruiert, sondern lediglich, um die für 3D-Projektionen erforderlichen zwei Bilder gleichzeitig projizieren zu können.

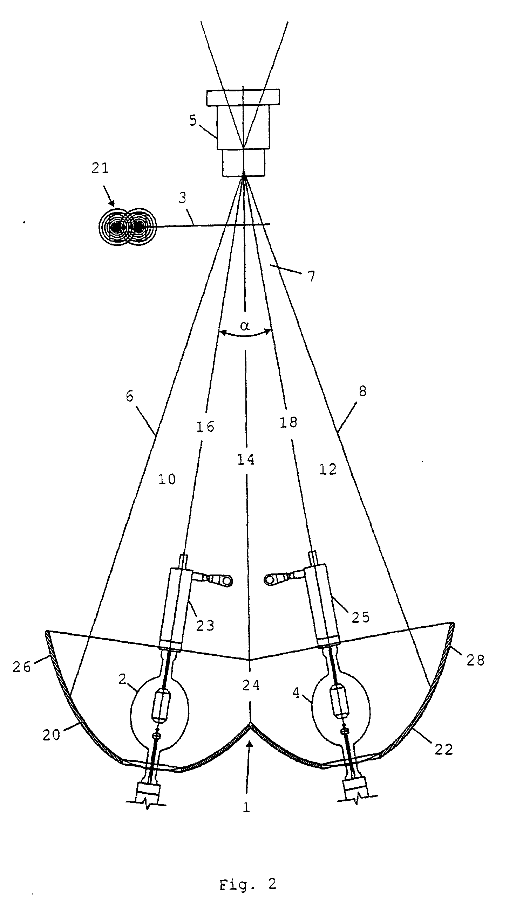

Fig. 2 zeigt eine erfindungsgemäße Vorrichtung zur Großbildprojektion bzw. eine Projektionslampe für das Lampenhaus eines Großbildprojektors im Schnitt. Die gesamte dargestellte Vorrichtung, die in Fachkreisen auch als "Lampenhaus" bezeichnet wird, enthält im wesentlichen eine Projektionslampe 1, eine Bildprojektionsebene 3 und ein Objektiv 5, wobei die Projektionslampe 1 einen Lichtkegel 7 durch die Bildprojektionsebene 3 und durch das Objektiv 5 dirigiert. Die Projektionslampe 1 enthält zwei Lichtquellen 2, 4, wie sie von handelsüblichen Xenonhochdruchlampen erzeugt werden. Bei solchen Lampen bestehen die Lichtquellen 2, 4 aus einem Lichtbogen, der in einem unter verhältnismäßig hohem Druck von mehr als 100 kPa mit Xenongas gefüllten Glaskolben 23, 25 erzeugt wird. Den Lichtquellen 2, 4 ist je ein Reflektor 20, 22 zugeordnet, die sich von den Reflektoren handelsüblicher Projektionslampen allerdings dadurch unterscheiden, daß die Randbereiche 26, 28 jener Reflektoren jeweils auf der einander zugewandten Seite gekürzt und jene gekürzten Abschnitte miteinander verbunden sind. Die beiden Lichtquellen 2, 4 mit ihren Reflektoren 20, 22 sind dabei so zueinander angeordnet, daß die optischen Achsen 16, 18 der beiden Reflektoren 20, 22 einen Winkel α von etwa 18° miteinander einschließen.

Die von den Lichtquellen 2, 4 mittels der Reflektoren 20, 22 abgestrahlten Teillichtkegel 10, 12 bilden dabei jenen Teil des insgesamt von den Reflektoren 20, 22 reflektierten Lichts der Lichtquellen 2, 4, welcher auch für die Bildprojektion verwendet wird. Dieser Anteil des Gesamtlichts wird nur innerhalb eines Bereiches der schalenförmigen Reflektoren 20, 22 erzeugt, welcher jeweils den Randbereich 26 bzw. 28 nicht mit einschließt. Der von jenen Randbereichen 26, 28 reflektierte Anteil des Lichts ist nämlich Streulicht, das zur Bildprojektion keinen Beitrag leistet.

Wie aus der Schnittdarstellung der Fig. 2 ersichtlich ist, liegen die beiden Teillichtkegel 10, 12 so eng aneinander, daß die Kegelmäntel 6, 8 jener den (Haupt-)Lichtkegel 7 speisenden und von den Lichtquellen 2, 4 erzeugten Teillichtkegel 10, 12 eine gemeinsame Mantellinie 14 in der Mitte zwischen den beiden Teillichtkegeln 10, 12 aufweisen. Diese gemeinsame Mantellinie 14 definiert auch eine Schnittlinie 24 der beiden Reflektoren 20, 22, an der die Reflektoren 20, 22 mittig ineinander übergehen. Das wurde in dem vorliegenden Ausführungsbeispiel dadurch erreicht, daß die zu den nutzbaren Teillichtkegeln 10, 12 nichts beitragenden Randbereiche 26, 28 der Reflektoren 20, 22 jeweils an jener Schnittlinie 24, also auf den einander zugewandten Seiten, gekürzt und die gekürzten Abschnitte miteinander verbunden sind.

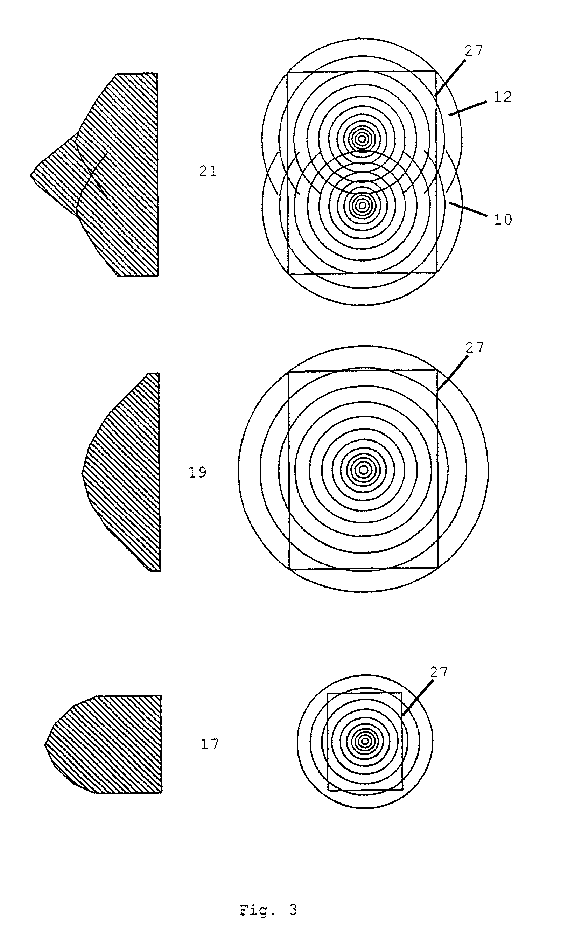

Fig. 3 zeigt drei Lichtverteilungsdiagramme 17, 19, 21, von denen das Diagramm 21 bereits andeutungsweise bei der Bildprojektionsebene 3 in Fig. 2 gezeigt ist. Anhand dieser drei Lichtverteilungsdiagramme der Fig. 3 wird die eingangs geschilderte und teilweise auf dem lichttechnischen Entfernungsgesetz und teilweise auf den kurzen Brennweiten in modernen Breitwandkinos beruhende Problematik einer ungenügenden Ausleuchtung großer Bildprojektionsflächen 27, z.B. einer Kinoleinwand, bei gleichbleibender Lichtleistung deutlich: In der rechten Hälfte der Fig. 3 sind jeweils die Bildprojektionsflächen 27 dargestellt, die selbstverständlich bis in die Ecken mit projiziertem Licht auszuleuchten sind, und in der linken Hälfte sind die dazugehörigen Lichtverteilungsdiagramme gezeigt. Mit der Bezugsziffer 17 ist eine Bildprojektionsfläche 27 normaler Größe (35mm- Film mit einer Bildprojektionsebene von 18 x 24mm) und daneben deren Lichtverteilung über diese Fläche dargestellt. Mit der Bezugsziffer 19 ist eine auf das vierfache vergrößerte Bildprojektionsfläche 27 (Großbild eines 70 mm- Films mit einer Bildprojektionsebene von 36 x 48 mm) und daneben die Verteilung der Lichtintentsität bei gleichbleibender Leistung der Lichtquelle gezeigt. Die deutliche Abflachung der Lichtintentsitätskurve zeigt eine noch relativ hohe, aber dennoch im Vergleich mit dem Beispiel der Bezugsziffer 17 deutliche reduzierte Lichtintensität in der Mitte der Fläche 27, während in den Randbereichen von Anfang an bereits wesentlich geringere Lichtintensitäten meßbar sind. Diese stark verminderte Beleuchtungsstärke der Bildprojektionsfläche 27 liegt im wesentlichen an dem bereits besprochenen lichttechnischen Entfernungsgesetz bzw. an den kurzen Brennweiten.

Schließlich ist mit Bezugsziffer 21 das mit der erfindungsgemäßen Vorrichtung zur Großbildprojektion bzw. mit der erfindungsgemäßen Projektionslampe erzielbare Ergebnis dargestellt. Die Bildprojektionsfläche 27 ist gegenüber dem Beispiel der Bezugsziffer 19 unverändert, und auch hier ist die gesamte Bildprojektionsfläche bis in die Ecken hin von den beiden Teillichtkegeln erfaßt. Das in der linken Hälfte dargestellte Lichtverteilungsdiagramm 21 zeigt eine gegenüber dem mit Bezugsziffer 19 bezeichneten Beispiel erheblich verbesserte und gesteigerte Licht- und Lichtintensitätsverteilung, die darauf beruht, daß sich der aus den beiden Teillichtkegeln 10, 12 resultierende Lichtkegel zur Bildmitte hin verstärkt und die einzelnen Teillichtkegel 10, 12 näher am rechten und linken Bildrand stehen, als bei einem einzigen Lichtkegel gemäß den Beispielen 17 und 19.

Die erfindungsgemäße Doppellampenanordnung läßt sich selbstverständlich auch auf 3D-Anwendungen gemäß Fig. 1 übertragen, wobei dann jede der einzelnen Projektionslampen durch die Doppellampenanordnung der vorliegenden Erfindung zu ersetzen wäre. Die dabei auftretenden größeren Einfallwinkel wären durch entsprechende Gestaltung der Prismenanordnungen auszugleichen.

## Patentansprüche

1. Vorrichtung zur Großbildprojektion, mit einer Projektionslampe (1), einer Bildprojektionsebene (3) und einem Objektiv (5), wobei die Projektionslampe (1) einen Lichtkegel (7) durch die Bildprojektionsebene (3) und durch das Objektiv (5) dirigiert,
**dadurch gekennzeichnet, daß**
die Projektionslampe (1) zwei Lichtquellen (2, 4) enthält, die derart zueinander angeordnet sind, daß die Mäntel (6, 8) der beiden den (Haupt-)Lichtkegel (7) speisenden und von den Lichtquellen (2, 4) erzeugten Teillichtkegel (10, 12) wenigstens eine gemeinsame Mantellinie (14) aufweisen.

2. Vorrichtung nach Anspruch 1,
**dadurch gekennzeichnet, daß**
die optischen Achsen (16, 18) der beiden Teillichtkegel (10, 12) einen Winkel α von etwa 18° einschließen.

3. Vorrichtung nach Anspruch 1 oder 2,
**dadurch gekennzeichnet, daß**
die den beiden Lichtquellen (2, 4) zugeordneten Reflektoren (20, 22) an der gemeinsamen Mantellinie (14) der Teillichtkegel (10, 12) ineinander übergehen, wobei die gemeinsame Mantellinie (14) im Querschnitt eine Schnittlinie (24) der beiden Reflektoren (20, 22) miteinander definiert.

4. Vorrichtung nach einem der Ansprüche 1 bis 3,
**dadurch gekennzeichnet, daß**
die Randbereiche (26, 28) der den beiden Lichtquellen (2, 4) zugeordneten Reflektoren (20, 22) jeweils auf der einander zugewandten Seite gekürzt und die gekürzten Abschnitte miteinander verbunden sind.

5. Projektionslampe für das Lampenhaus eines Großbildprojektors,
**gekennzeichnet durch**
zwei Lichtquellen (2, 4), die derart zueinander angeordnet sind, daß die Mäntel (6, 8) der beiden den (Haupt-)Lichtkegel (7) speisenden und von den Lichtquellen (2, 4) erzeugten Teillichtkegel (10, 12) wenigstens eine gemeinsame Mantellinie (14) aufweisen.

6. Projektionslampe nach Anspruch 5,
**dadurch gekennzeichnet, daß**
die optischen Achsen (16, 18) der beiden Teillichtkegel (10, 12) einen Winkel α von etwa 18° einschließen.

7. Projektionslampe nach Anspruch 5 oder 6,
**dadurch gekennzeichnet, daß**
die den beiden Lichtquellen (2, 4) zugeordneten Reflektoren (20, 22) an der gemeinsamen Mantellinie (14) der Teillichtkegel (10, 12) ineinander übergehen, wobei die gemeinsame Mantellinie (14) im Querschnitt eine Schnittlinie (24) der beiden Reflektoren (20, 22) miteinander definiert.

8. Projektionslampe nach einem der Ansprüche 5 bis 7,
**dadurch gekennzeichnet, daß**
die Randbereiche (26, 28) der den beiden Lichtquellen (2, 4) zugeordneten Reflektoren (20, 22) jeweils auf der einander zugewandten Seite gekürzt und die gekürzten Abschnitte miteinander verbunden sind.

## Geänderte Patentansprüche

### Geänderte Patentansprüche gemäss Regel 86(2) EPÜ.

**1.** Vorrichtung zur Großbildprojektion, mit einer Projektionslampe (1), einer Bildprojektionsebene (3) und einem Objektiv (5), wobei die Projektionslampe (1) einen Lichtkegel (7) durch die Bildprojektionsebene (3) und durch das Objektiv (5) dirigiert,
**dadurch gekennzeichnet, daß**
die Projektionslampe (1) zwei Lichtquellen (2, 4) enthält, die derart zueinander angeordnet sind, dass die Mäntel (6, 8) der beiden den (Haupt-)Lichtkegel (7) speisenden und von den Lichtquellen (2, 4) erzeugten Teillichtkegel (10, 12) wenigstens eine gemeinsame Mantellinie (14) aufweisen und die optischen Achsen (16, 18) der beiden Teillichtkegel (10, 12) konvergieren.

**5.** Projektionslampe für das Lampenhaus eines Großbildprojektors,
**gekennzeichnet durch**
zwei Lichtquellen (2, 4), die derart zueinander angeordnet sind, daß die Mäntel (6, 8) der beiden den (Haupt-)Lichtkegel (7) speisenden und von den Lichtquellen (2, 4) erzeugten Teillichtkegel (10, 12) wenigstens eine gemeinsame Mantellinie (14) aufweisen und die optischen Achsen (16, 18) der beiden Teillichtkegel (10, 12) konvergieren.
